# EUROPEAN PATENT APPLICATION

(11) **EP 1 366 794 A1**
(43) Date of publication of application: **03.12.2003**
(21) Application number: 03252906.7
(22) Date of filing: 09.05.2003
(51) Int. Cl.: B01D 53/04, B01D 53/26, B01D 53/28, B01J 20/10, B01J 20/08

(54) **Process for purifying gas streams using composite adsorbent**

(30) Priority: 31.05.2002 US 159381
(71) Applicant: AIR PRODUCTS AND CHEMICALS, INC., Allentown, PA 18195-1501 (US)
(72) Inventor: Golden, Timothy Christopher, Allentown, PA 18104 (US); Salter, Elizabeth Helen, Staffordshire ST7 2PP (GB); Raiswell, Christopher James, Crewe CW1 8JQ (GB); Taylor, Fred William, Coplay, PA 18037 (US); Kalbassi, Mohammad Ali, Weybridge, Surrey KT13 8SP (GB)
(74) Representative: Smart, Peter John

(57) **Abstract**

A process for removing at least water and carbon dioxide from a feed gas stream of air, synthesis gas or natural gas is described, comprising the steps of:
contacting the feed gas stream with a composite adsorbent comprising silica and metal oxide, wherein the composite adsorbent contains at least 50 wt% silica, to form a first purified gas stream, and
regenerating the composite adsorbent at a temperature of 0 to 200 °C.

The process optionally further comprises contacting the first purified gas stream with a carbon dioxide adsorbent and/or a nitrous oxide or hydrocarbon adsorbent.

## Description

The present invention relates to a process for the removal of at least water and carbon dioxide from a feed gas stream.

The cryogenic purification of air requires a pre-purification step for the removal of high-boiling and hazardous materials. Principal high-boiling air components include water and carbon dioxide. If removal of these impurities from ambient air is not achieved, then water and carbon dioxide will freeze out in cold sections of the separation apparatus (for example in the heat exchangers and liquid oxygen sump) causing pressure drop and flow and operational problems. Various hazardous materials including acetylene and other hydrocarbons also need to be removed. High-boiling hydrocarbons are a problem because they concentrate in the liquid oxygen section of the separation apparatus, resulting in a potential explosive hazard. Currently pre-purification of air is achieved by adsorption. Adsorption systems include thermal swing adsorption (described in US-A-4541851 and US-A-5137548) and pressure swing adsorption (described in US-A-5232474) systems. These systems are usually designed for total water and carbon dioxide removal from ambient air. Adsorbents selective for water and carbon dioxide are required for these systems.

Thermal swing adsorption processes typically use a layered bed approach in which the feed air first contacts a water-selective adsorbent such as alumina or silica gel. The dry, carbon dioxide containing air then contacts a zeolite adsorbent to remove carbon dioxide to very low levels.

Many publications have been made relating to improved carbon dioxide selective adsorbents. 13X (NaX) or 5A zeolite are taught by US-A-4249915. X zeolites containing at least 90 % barium ions are taught by US-A-3885927 for the removal of carbon dioxide from gas streams containing not more than 1000 ppm carbon dioxide. X zeolites having a silicon to aluminium ratio of not more than 1.15 are taught by US-A-5531808 for the removal of low levels of carbon dioxide from gas streams.

By contrast, there are few publications relating to improved desiccant materials. A recent patent (US 6,379,430) teaches the use of activated alumina which contains small amounts of silica and metal oxides for the simultaneous removal of water and carbon dioxide from air. US-A-5779767 teaches the use of composite alumina/zeolite adsorbents for removal of water and carbon dioxide from air prior to cryogenic distillation.

In summary, there are numerous teachings regarding adsorption systems for the pre-purification of air prior to cryogenic distillation to produce oxygen or nitrogen. These systems require desiccants to remove ambient water from the feed air stream. Desiccants taught in the prior art include alumina, silica gel and zeolites.

The present invention relates to a process for removing at least water and carbon dioxide from a feed gas stream of air, synthesis gas or natural gas, comprising the steps of:
contacting the feed gas stream with a composite adsorbent comprising silica and metal oxide, wherein the composite adsorbent contains at least 50 wt% silica, to form a first purified gas stream, and regenerating the composite adsorbent at a temperature of 0 to 200 °C.

"Composite" is used herein to refer to particulate material wherein each particle contains silica and metal oxide in discrete portions within the particle. The silica and metal oxide are not chemically bound to a significant extent.

Preferably, the composite adsorbent contains 0.1 to 10 wt% metal oxide. Preferably, the metal oxide comprises oxide of at least one of aluminium, iron, zinc, vanadium and titanium. More preferably, the metal oxide is alumina.

Preferably, the composite adsorbent has a specific surface area of at least 600 m²/g. More preferably, the composite adsorbent has a specific surface area of 625 to 675 m²/g.

Preferably, the composite adsorbent has a total pore volume of at least 0.3 cm³/g. More preferably, the composite adsorbent has an average pore diameter of 3.0 nm or less.

Preferably, the process further comprises the step of:
contacting the first purified gas stream with a carbon dioxide adsorbent comprising one or more of alumina, impregnated alumina, A zeolites, or X zeolites to form a second purified gas stream. More preferably, the process further comprises the step of regenerating the carbon dioxide adsorbent. The process may further comprise the step of:
   contacting the second purified gas stream with a nitrous oxide or hydrocarbon adsorbent comprising one or more of CaX, NaX, and BaX zeolites to form a third purified gas stream.

In this case, the invention preferably further comprises the step of regenerating the nitrous oxide or hydrocarbon adsorbent. The nitrous oxide or hydrocarbon adsorbent may be the same material as the carbon dioxide adsorbent.

Preferably, the feed gas stream is at a temperature of 0 to 50 °C.

Preferably, the feed gas stream is at an absolute pressure of 2 to 20 atmospheres.

Preferably, the composite adsorbent is regenerated at an absolute pressure of 0.1 to 20 atmospheres.

Preferably, a regeneration gas consisting of oxygen, nitrogen, methane, hydrogen, argon or a mixture of two or more thereof is passed over the composite adsorbent during regeneration.

The invention is further described with reference to the preferred embodiments, as shown in the Figures, in which:
Figure 1 shows a schematic view of apparatus used in a preferred embodiment of the present invention.
Figure 2 shows a plot of water adsorbed against relative humidity (water isotherms) at 25 °C for high surface area silica gel, alumina/silica composite, low surface area silica gel and alumina.
Figure 3 shows a plot of water breakthrough time against bed contact time for alumina and alumina/silica composite.

Many process schemes for air pre-purification use low regeneration temperatures (for example US-A-5614000). These low regeneration temperatures are used to reduce plant power consumption. Where low regeneration temperatures are used, we have appreciated that the regeneration ability of the desiccant is important in minimising bed sizes to reduce plant capital costs.

The desiccants usually used to remove water from air are zeolites, alumina and silica gel. Zeolites adsorb water very strongly with a heat of adsorption about 18 kcal/mole (75 kJ/mole), and therefore require high regeneration energy. Zeolites can therefore only be used in high temperature TSA processes where a regeneration heat pulse moves all the way through the adsorption bed. Aluminas have lower heat of water adsorption of about 14 kcal/mole (59 kJ/mole) and also remove carbon dioxide. However, aluminas suffer irreversible hydrothermal aging during adsorptive cycling. This aging process, which is primarily the result of conversion of aluminium oxide to aluminium hydroxide, reduces the surface area of the alumina and lowers its water capacity. Silica gel has a low heat of water adsorption of about 12 kcal/mole (50 kJ/mole). However, high surface area silica gels, which are required to achieve high water capacity, break apart on exposure to liquid water. Exposure to liquid water is always possible during adsorptive drying processes, and therefore high surface area silica gels cannot be used for air pre-purification processes.

There is consequently a continuing need for more suitable desiccants with regeneration ability for feed gas streams. The present invention provides such a desiccant. In a preferred embodiment of the invention, the composite adsorbent is Sorbead WS™ from Engelhard™. Suitable alumina/silica composites may be manufactured by either of the processes described below.

In the first process, sodium silicate or active silicic acid gel, sodium aluminate and sodium hydroxide are mixed to form a gel of a sodium aluminosilicate which is homogenised and crystallised at a temperature of 85 to 200 °C under atmospheric pressure or hydrothermal conditions to form a P type zeolite. The zeolite is washed and subjected to an acid treatment to remove the sodium component so that the zeolite is rendered amorphous. The acid treatment may be carried out using an inorganic or organic acid, preferably in aqueous solution, for example hydrochloric acid, sulfuric acid, nitric acid or phosphoric acid. To perform the acid treatment, an aqueous slurry of the P type zeolite is formed and acid is added to the slurry. The acid treatment is preferably carried out at a temperature of 20 to 100 °C, and the concentration of zeolite particles in the slurry is preferably 5 to 30 % by weight. The acid treatment may be conducted in one stage or two or more stages, optionally separated by a drying or calcining and heat treatment stage.

The obtained alumina/silica particles are washed with water, dried and calcined to obtain a final product. In the second process, an alcohol(for example ethanol), water, a silicon alkoxide (for example silicon tetraethoxide) and an acid (for example hydrochloric acid) are mixed under conditions such that gelling or precipitation of silica is prevented. An acidic solution of an aluminum compound is added, a gelling agent is added, a gel is recovered which is washed with water and an organic liquid, the gel is then dried until a powder is obtained, and the powder is calcined. An example of this process is described in US-A-5849852, Example 3.

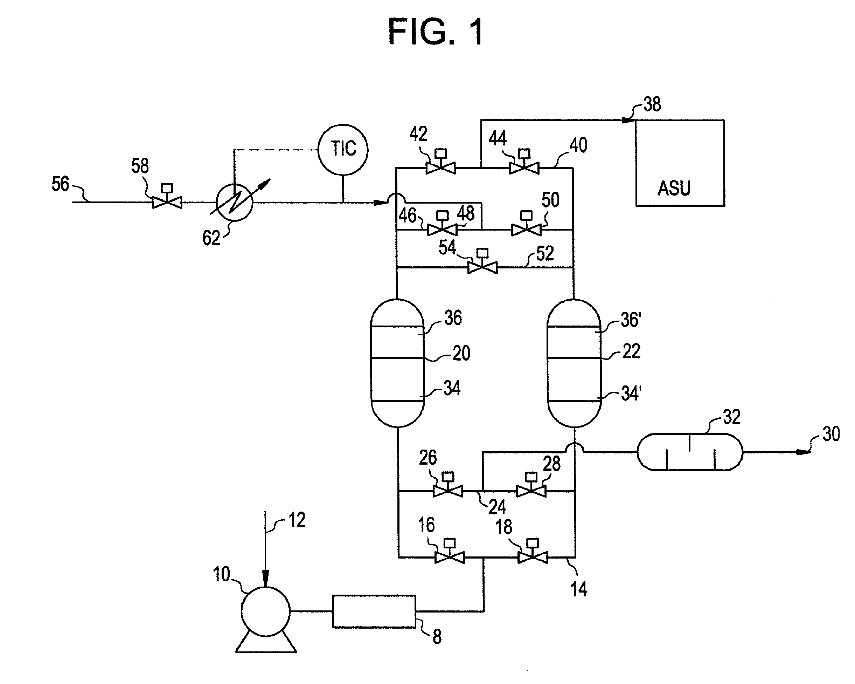

The composite adsorbent may alternatively comprise metal oxides other than alumina, for example iron oxide. As shown in Figure 1, air to be purified is supplied to a main air compressor system 10 at an inlet 12 in which it is compressed by a multi-stage compressor with inter and after cooling by heat exchange with water. Optionally, the compressed air feed is sub-cooled in a cooler 8. The cooled compressed air is supplied to an inlet manifold 14 containing inlet control valves 16 and 18 to which is connected a pair of adsorbent bed containing vessels 20 and 22. The inlet manifold is bridged downstream of the control valves 16 and 18 by a venting manifold 24 containing venting valves 26, 28 which serve to close and open connections between the upstream end of respective adsorbent vessels 20 and 22 and a vent 30 via a silencer 32. Each of the two adsorbent beds 20 and 22 contains two adsorbents. A lower portion of the adsorbent bed is designated by the numerals 34, 34' in respective beds and upper portion by the numeral 36, 36'. Portion 34, 34' contains a first composite adsorbent to adsorb water and carbon dioxide manufactured by the process described above and portion 36, 36'contains a second adsorbent to adsorb carbon dioxide (for example zeolite).

In an alternative embodiment, each adsorbent bed may contain three separate adsorbents, the third adsorbent to adsorb nitrous oxide or hydrocarbons. Adsorbents may be arranged in layers, for example adsorbents may be radially layered. It should be understood that the vessels 20 and 22 can each if desired be separated into smaller vessels arranged in series and references to "layers" of adsorbent above include arrangements in which the separate adsorbents are placed in separate vessels arranged in series.
The apparatus has an outlet 38 connected to the down-stream ends of the two adsorbent vessels 20, 22 by an outlet manifold 40 containing outlet control valves 42, 44. The outlet is connected to an air separation unit (ASU). The outlet manifold 40 is bridged by a regenerating gas manifold 46 containing regenerating gas control valves 48 and 50. Upstream from the regenerating gas manifold 46, a line 52 containing a control valve 54 also bridges across the outlet manifold 40.

An outlet for regenerating gas is provided at 56 which through control valve 58 is connected to pass through a heater 62 to the regenerating gas manifold 46. The operation of the valves may be controlled by suitable programmable timing and valve opening means as known in the art, not illustrated.

In operation air is compressed in the main compressor system 10 and is fed to the inlet manifold 14 and passes through one of the two vessels containing adsorbent.
Starting from a position in which air is passing through open valve 16 to adsorbent vessel 20, and through open valve 42 to the outlet 38 and air separation unit, valve 18 in the inlet manifold will just have been closed to cut-off vessel 22 from the feed of air for purification. Valve 44 will just have closed also. At this stage valves 46, 50, 54, 26 and 28 are all closed. Bed 20 is thus on-line and bed 22 is to be regenerated.

To commence depressurisation of bed 22, valve 28 is opened and once the pressure in the vessel 22 has fallen to a desired level, valve 28 is kept open whilst valve 50 is opened to commence a flow of regenerating gas. The regenerating gas will typically be a flow of dry, carbon dioxide-free nitrogen obtained from the air separation unit cold box, possibly containing small amounts of argon, oxygen and other gases, to which the air purified in the apparatus shown is passed. Valve 58 is opened so that the regenerating gas is heated to a temperature of for instance 100°C before passing into the vessel 22. The exit purge gas emerges from the vent outlet 30 in a cooled state.

At the end of the allotted regeneration period, valve 58 may be closed to end the flow of regenerating gas and valve 54 may be opened to displace nitrogen from the adsorbent and, after the closing of valve 28, to repressurise the vessel 22 with purified air. Thereafter, valve 54 may be closed and valves 18 and 44 may be opened to put the vessel 22 back on line. The vessel 20 may then be regenerated in a similar manner and the whole sequence continued with the vessels being on-line, depressurising, regenerating, repressurising, and going back on-line in phase cycles of operation.

It will be appreciated that although the invention has been described with reference to preferred embodiments, many variations and modifications thereof are possible within the scope of the invention.

### Example 1

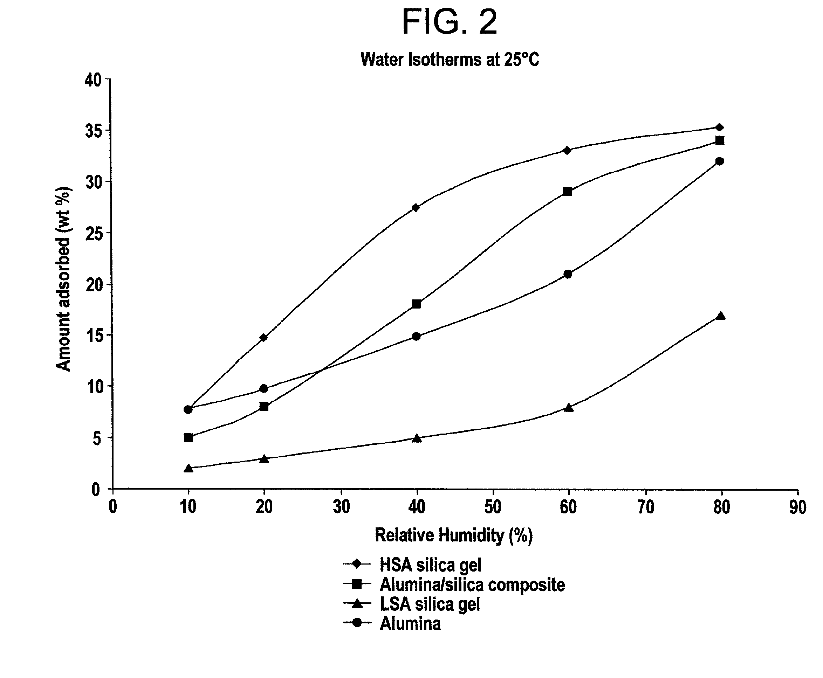

Water adsorption isotherms were measured on activated alumina (Alcan AA-300™, 320 m²/g), a high surface area silica gel (Davison Bead Gel™, 750 m²/g, 99.6 % silica), an alumina/silica gel composite (Engelhard Sorbead WS™, 650 m²/g, 3 % alumina/97 % silica) and a low surface area silica gel (Davison Grade 55™, 300 m²/g, 99.6 % silica, total pore volume 0.4 cm³/g, average pore diameter 2.5 nm). The water isotherms are shown in Figure 2.

The results in Figure 2 indicate that the high surface area (HSA) silica gel shows the highest water capacity of the materials tested. However, when the HSA silica gel is placed in liquid water it breaks apart. The alumina/silica composite adsorbent has a slightly lower water capacity, but it is stable in liquid water. Thus, the alumina/silica composite adsorbent has both high water capacity and the required stability towards liquid water required for TSA and PSA driers. The low surface area silica gel is stable towards liquid water, but it has very low water capacity.

### Example 2

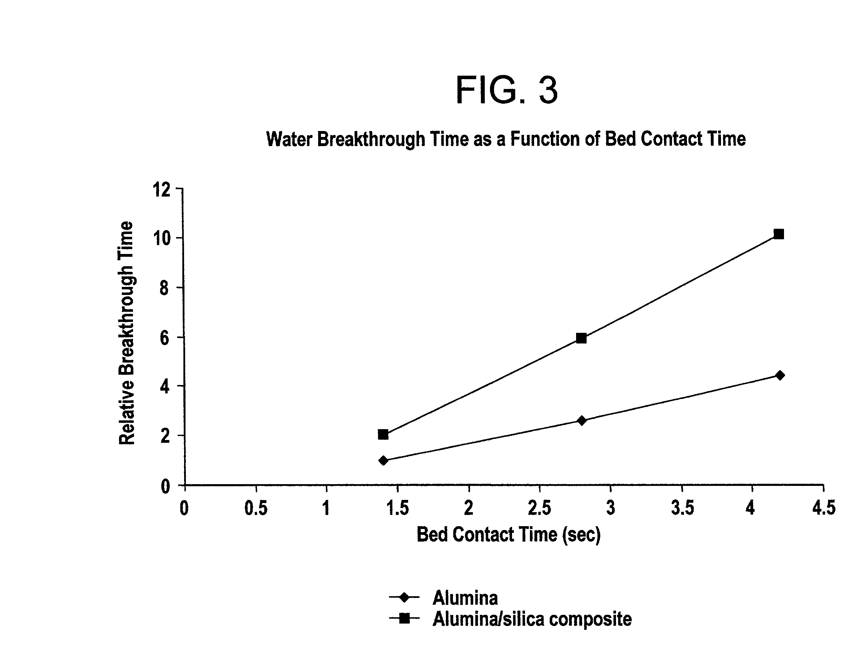

Water breakthrough curves were measured on the activated alumina and alumina/silica composite samples used in Example 1. The breakthrough curves were conducted with water-saturated air at 25 °C. The feed pressure was 135 psig (9.31 kPa), the flow rate was 55 1bmoles/hr/ft² (2.7 × 10⁵ moles/hr/m²), the particle size of the adsorbents was 3.6 mm average and the column was 6 feet (1.8 m) long and 1 inch (2.5 cm) in diameter. Water breakthrough was determined with a dew point probe and an outlet dew point of -45 °C was used to define water breakthrough. The results of the breakthrough testing are shown in Figure 3.

Figure 3 shows how long it takes the water to break through to -45 °C dew point at various total bed adsorber contact times. For a bed for water removal with a relative breakthrough time of 4, Figure 3 shows that the alumina contact time is 3.9 seconds. For the alumina/silica gel composite the contact time is 2.2 seconds. Since the two adsorbers were tested at the same feed conditions (temperature, pressure and flow rate), contact time is directly related to bed volume. The results therefore show that a 44 % reduction in bed volume can be used to remove water with the alumina/silica gel composite compared with alumina.

### Example 3

PSA experiments were carried out to compare the performance of base-treated alumina (as described in US-A-5656064) with a layered bed of alumina/silica gel composite (20 vol%) followed by base-alumina (80 vol%). The PSA was conducted with water-saturated air at 25 °C, a feed flow rate of 30 1bmoles/hr/ft² (1.5 × 10⁵ moles/hr/m²), a feed pressure of 30 psig (2.1 kPa) and a molar purge/air ratio of 0.55. Purge was carried out with nitrogen at 8 psig (0.55 kPa), 25 °C and the equipment used was as described in Example 2. The results of the PSA testing are shown in Table 1.

**Table 1**

| Adsorbent | Relative Bed Volume for Water Removal | Relative Bed Volume for Carbon Dioxide Removal | % Water Removed in Composite Alumina/Silic a Layer |
|---|---|---|---|
| Base-treated Alumina | 1.0 | 1.0 | N/A |
| Alumina/Silic a Composite and Base-treated Alumina | 0.43 | 0.62 | 99 % |

The results in Table 1 show that using the alumina/silica composite as the desiccant in the PSA reduces the bed volume required for both water and carbon dioxide removal. Using the alumina/silica composite on the PSA inlet reduces the bed volume required for water removal by 57 %. The use of the composite on the feed end of the PSA also reduces the total bed volume for carbon dioxide by 38 %. This clearly shows the utility of the alumina/silica composite desiccant to improve the performance of both a PSA drier and a pre-purification PSA for removal of at least water and carbon dioxide from ambient air.

### Example 4

The crush strength of a pure silica gel (99.6 % silica), an activated alumina and an alumina/silica composite are shown in Table 2. The average particle size of the materials tested was 3.6 mm.

**Table 2**

| Adsorbent | Bulk Density (1b/ft³) | Crush Strength (1b) |
|---|---|---|
| Silica | 47 (750 kg/m²) | 3.6 (1.6 kg) |
| Alumina (3 %)/Silica (97 %) | 44 (710 kg/m²) | 34.3 (15.5 kg) |
| Alumina | 54 (860 kg/m²) | 35.3 (16.0 kg) |

The data in Table 2 show that all three desiccants have very similar bulk densities. However, the silica has a much lower crush strength than the other two adsorbents. It is quite unexpected that the alumina/silica composite has the same crush strength as alumina despite having twice the surface area (650 m²/g compared with 320 m²/g).

### Example 5

Another important property of commercial desiccants is hydrothermal stability. Over long periods of time, water and steam can effectively age desiccants by conversion of oxides to hydroxides. This slow chemical conversion results in a loss of surface area of the desiccant and loss in water adsorption capacity. It is desired to have a desiccant with as little susceptibility to hydrothermal aging as possible. To test the hydrothermal stability of some desiccants, the materials were steamed at various steam pressures for 16 hours then water adsorption isotherms were measured at 30 °C and compared with water isotherms on fresh material. The results of the steaming experiments are shown in Table 3.

**Table 3**

| Adsorbent | Water Capacity at 23 % RH, as received | Water Capacity at 23 % RH, 1.7 bar steam | Water Capacity at 23 % RH, 3.0 bar steam |
|---|---|---|---|
| Silica | 11.0 wt% | 5.9 wt% | 5.6 wt% |
| Alumina/sili ca | 7.9 wt% | 7.4 wt% | 7.0 wt% |
| Alumina | 8.8 wt% | 5.8 wt% | 5.4 wt% |

The results in Table 3 show that both alumina and silica have higher water capacity than the alumina/silica composite at 23 % RH. However, after steaming the materials for 16 hours at 1.7 bar steam, the alumina/silica composite loses only 6 % of its water capacity. In fact, the alumina/silica composite has the highest water capacity of the desiccants tested at 23 % RH after steaming at 1.7 bar. The same trend is seen with steaming at 3.0 bar. This clearly shows the improved hydrothermal stability of the alumina/silica composite over the alumina and silica.

### Example 6

The utility of the alumina/silica composite was tested in a temperature swing process. The two bed process was carried out in vessels 6 inches diameter (15 cm) by 6 feet (1.8 m) long. Feed air saturated with water at 35 °C with 400 ppm carbon dioxide was treated at 7.3 bar and an air flow of 135 Nm³/hr. The regeneration temperature was 65 °C and the purge/air ratio was 0.45. In one test, the TSA vessels contained 75 vol% impregnated alumina as in US-A-5656064 at the feed end of the bed and 25 vol% 13 X zeolite at the product end. In the second test, the bed was reconfigured to include, from feed to outlet, 25 vol % alumina/silica composite, 50 vol% impregnated alumina as above and 25 vol% 13X zeolite. The test results showed that bed configuration with the alumina/silica composite present processed 20 % more feed air for the same vessel volume as the bed configuration without the composite.

### Example 7

Carbon dioxide breakthrough curves were measured on alumina, silica and alumina/silica composite at 25 °C, 7.8 bar with feed air containing 400 ppm carbon dioxide. The result of the breakthrough testing is shown in Table 4.

**Table 4**

| Adsorbent Adsorbent | Carbon Dioxide Capacity (mmole/g) |
|---|---|
| Alumina | 0.11 |
| Silica | 0.004 |
| Alumina/silica | 0.013 |

The results in Table 4 show that alumina has a significantly higher carbon dioxide capacity than silica or the alumina/silica composite. That is why alumina is typically the preferred desiccant to use when both water and carbon dioxide removal is required. Given the results above, it is surprising that a desiccant like alumina/silica composite could outperform pure alumina in a process where both water and carbon dioxide removal is required. Another advantage of the alumina/silica composite over pure silica is that the composite material has about 3 times the carbon dioxide capacity.

## Claims

1. A process for removing at least water and carbon dioxide from a feed gas stream of air, synthesis gas or natural gas, comprising the steps of:
contacting the feed gas stream with a composite adsorbent comprising silica and metal oxide, wherein the composite adsorbent contains at least 50 wt% silica, to form a first purified gas stream, and
regenerating the composite adsorbent at a temperature of 0 to 200 °C.

2. A process as claimed in Claim 1, wherein the composite adsorbent contains 0.1 to 10 wt% metal oxide.

3. A process as claimed in Claim 1 or Claim 2, wherein the metal oxide comprises oxide of at least one of aluminium, iron, zinc, vanadium and titanium.

4. A process as claimed in Claim 3, wherein the metal oxide is alumina.

5. A process as claimed in any one of the preceding claims, further comprising the step of:
contacting the first purified gas stream with a carbon dioxide adsorbent comprising one or more of alumina, impregnated alumina, A zeolites, or X zeolites to form a second purified gas stream.

6. A process as claimed in Claim 5, further comprising the step of regenerating the carbon dioxide adsorbent.

7. A process as claimed in Claim 5 or Claim 6, further comprising the step of:
contacting the second purified gas stream with a nitrous oxide or hydrocarbon adsorbent comprising one or more of CaX, NaX and BaX zeolites to form a third purified gas stream.

8. A process as claimed in Claim 7, further comprising the step of regenerating the nitrous oxide or hydrocarbon adsorbent.

9. A process as claimed in Claim 8, wherein the nitrous oxide or hydrocarbon adsorbent is the same material as the carbon dioxide adsorbent.

10. A process as claimed in any one of the preceding claims, wherein the feed gas stream is at a temperature of 0 to 50 °C.

11. A process as claimed in any one of the preceding claims, wherein the feed gas stream is at an absolute pressure of 2 to 20 atmospheres.

12. A process as claimed in any one of the preceding claims, wherein the composite adsorbent is regenerated at an absolute pressure of 0.1 to 20 atmospheres.

13. A process as claimed in any one of the preceding claims, wherein a regeneration gas consisting of oxygen, nitrogen, methane, hydrogen, argon or a mixture of two or more thereof is passed over the composite adsorbent during regeneration.
